# EUROPÄISCHE PATENTSCHRIFT

(11) **EP 2 043 897 B1**
(45) Veröffentlichungstag und Bekanntmachung des Hinweises auf die Patenterteilung: **19.05.2010**
(21) Anmeldenummer: 08749036.3
(22) Anmeldetag: 22.04.2008
(51) Int. Cl.: B60W 10/26, B60W 20/00, B60W 40/12

(54) **VERFAHREN ZUR REGELUNG DES LADEZUSTANDES EINES ENERGIESPEICHERS FÜR EIN FAHRZEUG MIT HYBRIDANTRIEB**
METHOD FOR REGULATING THE CHARGING STATE OF AN ENERGY ACCUMULATOR FOR A VEHICLE COMPRISING A HYBRID DRIVE
PROCÉDÉ DE RÉGULATION DE L'ÉTAT DE CHARGE D'UN ACCUMULATEUR D'ÉNERGIE POUR UN VÉHICULE ÉQUIPÉ D'UN GROUPE MOTOPROPULSEUR HYBRIDE

(30) Priorität: 28.04.2007 DE 102007020196
(43) Veröffentlichungstag der Anmeldung: 08.04.2009
(73) Patentinhaber: Voith Patent GmbH, 89522 Heidenheim (DE)
(72) Erfinder: HOFFMANN, Rolf, 89555 Steinheim (DE)
(74) Vertreter: Dr. Weitzel & Partner
(86) Internationale Anmeldenummer: PCT/EP2008/003204
(87) Internationale Veröffentlichungsnummer: WO 2008/131885

(56) Entgegenhaltungen:
- EP-A- 1 676 738
- DE-A1- 10 346 213
- US-B1- 6 242 873
- US-B1- 6 269 290

## Beschreibung

Die Erfindung betrifft ein Verfahren zur Regelung des Ladezustandes (Ladezustandsregelverfahren) eines Energiespeichers für ein Fahrzeug mit Hybridantrieb sowie eine Steuereinheit zur Durchführung des Verfahrens. Dabei wird ein Fahrgeschwindigkeitsgrößenwert des Fahrzeuges mittels einer Fahrgeschwindigkeitserfassungseinrichtung erfasst und ein Sollladezustand des Energiespeichers in Abhängigkeit von dem Fahrgeschwindigkeitsgrößenwert durch die Steuereinheit bestimmt. Nach einem Erfassen eines Istladezustandes des Energiespeichers mittels Ladezustandserfassungsmittein wird der Istladezustand mit dem Sollladezustand durch die Steuereinheit verglichen.

Derartige Verfahren sind zum Beispiel aus der gattungsbildenden DE 10346213 A1 und der DE 44 30 670 A1 bekannt. Fahrzeuge mit Hybridantrieb verfügen über einen Verbrennungsmotor und einen Elektromotor. Mittels des Elektromotors wird während des Anlassens und des Beschleunigens bzw. Hochdrehens des Verbrennungsmotors ein Drehmoment an diesen angelegt. Dies kann zum Beispiel über eine Koppelung des Elektromotors an den Antriebsstrang des Fahrzeuges vorgenommen werden. Während einer Bremsung des Fahrzeuges wird der Elektromotor als Generator verwendet, mittels dessen kinetische Energie des Fahrzeuges (Bremsenergie) in elektrische Energie umgewandelt wird und in den Energiespeicher zurückgespeichert wird. Dadurch kann der Energieverbrauch des Kraftfahrzeuges relativ zu einem Kraftfahrzeug mit lediglich einem Verbrennungsmotor erheblich verringert werden.

Die US 6 242 873 B2 bescheibt ein Fahrzeug modell sowie deisen Eberpiefung und Anpassung. Zur Regelung des Ladezustandes des Energiespeichers wird eine Funktion oder Kennlinie in Abhängigkeit von Fahrgeschwindigkeitsgrößenwerten, das heißt von Werten, die proportional zur Fahrgeschwindigkeit oder die Fahrgeschwindigkeit selbst sind, definiert, die eine untere Grenze des Ladezustandes des Energiespeichers angibt. Liegt der aktuelle Ladezustand des Energiespeichers, also der Istladezustand, unter einem bei einem aktuellen Fahrgeschwindigkeitsgrößenwert mittels der Funktion oder der Kennlinie ermittelten Sollladezustand, so wird der Energiespeicher mittels des als Generator verwendeten Elektromotors aufgeladen. Anderenfalls wird eine Aufladung des Energiespeichers durch die Verbrennungskraftmaschine nicht durchgeführt. Die Kennlinie bzw. die Funktion ist derart ausgelegt, dass mit zunehmender aktueller Fahrgeschwindigkeit zunehmend niedrige Ladezustände des Energiespeichers erlaubt werden, ohne dass die Verbrennungskraftmaschine zur Aufladung des Speichers herangezogen wird. Dies ist damit begründet, dass mit zunehmender Fahrgeschwindigkeit die Wahrscheinlichkeit steigt, dass der Energiespeicher zeitnah durch eine Bremsung aufgeladen wird und eine Überladung des Energiespeichers verhindert werden soll.

Die bekannten Verfahren gehen implizit von einem relativ großen Speicher aus, dessen Ladezustand durch die Bremsenergie nur in einem gewissen Bereich erhöht wird. Außerdem gehen sie davon aus, dass ein gewisser Ladezustand des Speichers mindestens eingehalten werden muss, weshalb bei Bedarf auch die Verbrennungskraftmaschine zum Aufladen des Speichers herangezogen wird. Diese Verfahren sind deshalb gut für Batterien bzw. Akkumulatoren als Speicher geeignet. Batterien haben jedoch einen relativ schlechten Wirkungsgrad hinsichtlich der Relation "zum Aufladen notwendige Energie" zu "bei Entladung wiederverwendbare Energie", da sie einen relativ hohen Innenwiderstand aufweisen, was durch die beim Auf- bzw. Entladen auftretenden chemischen Reaktionen in der Batterie zurückzuführen ist.

Weiter verschleißen Batterien bzw. Akkumulatoren bereits nach einigen tausend Ladezyklen, wodurch ihr Wirkungsgrad weiter verschlechtert wird. Zur Speicherung elektrischer Energie ist es weiter bekannt, Kondensatoren zu verwenden. Kondensatoren haben einen weit besseren Wirkungsgrad als Batterien oder Akkumulatoren und verschleißen wesentlich weniger. So vermindert sich der Wirkungsgrad von Kondensatoren erst ab einer Anzahl von Ladezyklen im Millionenbereich. Bei Kondensatoren handelt es sich jedoch um verhältnismäßig kleine Energiespeicher, das heißt ihre Ladekapazität ist nicht wesentlich größer als die Bremsenergie, die bei einer Bremsung des Fahrzeugs aus dessen Höchstgeschwindigkeit bis zum Stillstand auftritt. Kondensatoren weisen also relativ zu Batterien oder Akkumulatoren nur eine geringe Ladekapazität, das heißt eine geringe maximale Energiespeicherkapazität auf, so dass die bekannten Ladezustandsregelverfahren nur schlecht zur Regelung des Ladezustandes eines Kondensators geeignet sind.

Das Dokument WO 2007/028755 A1 offenbart eine Vorrichtung zur Energieversorgung sowie ein Verfahren zur Energieflusssteuerung in einem Hybridfahrzeug, welches über zwei Energiespeicher verfügt, wobei ein Laderegler vorhanden ist, welcher den Sollladezustand des einen Energiespeichers einstellt, derart, dass der Sollladezustand des einen Energiespeichers mit zunehmender Geschwindigkeit des Hybridfahrzeugs gesenkt wird.

Das Dokument EP 1 136 311 A2 beschreibt ebenfalls eine Energieladevorrichtung sowie ein Verfahren zum Laden einer Energiespeichereinheit für ein Hybridfahrzeug.

Der Erfindung liegt die Aufgabe zugrunde, ein Verfahren zur Regelung des Ladezustandes eines Energiespeichers für ein Fahrzeug mit Hybridantrieb sowie eine Steuereinheit zur Durchführung des Verfahrens bereitzustellen, welche die Nachteile des Standes der Technik vermeiden, insbesondere wobei das Verfahren zur Regelung des Ladezustandes von Energiespeichern mit einer relativ kleinen maximalen Energiespeicherkapazität geeignet sein soll.

Diese Aufgabe wird durch das Verfahren und die Steuereinheit nach den unabhängigen Ansprüchen gelöst. Die abhängigen Ansprüche stellen bevorzugte Ausführungsformen der Erfindung dar.

Ein erfindungsgemäßes Verfahren zur Regelung des Ladezustandes eines Energiespeichers für ein Fahrzeug mit Hybridantrieb weist folgende Verfahrensschritte auf:
- Erfassen eines Fahrgeschwindigkeitsgrößenwertes des Fahrzeuges mittels einer Fahrgeschwindigkeitserfassungseinrichtung und Bestimmen eines Sollladezustandes des Energiespeichers in Abhängigkeit von dem Fahrgeschwindigkeitsgrößenwert durch eine Steuereinheit;
- Erfassen eines Istladezustandes des Energiespeichers mittels Ladezustandserfassungsmitteln; und
- Vergleichen des Istladezustandes mit dem Sollladezustand durch die Steuereinheit;
- mittels eines Ladezustandsreglers wird ein Aufschalten eines Energieverbrauchers zur zumindest Teilentladung des Energiespeichers bei Überschreiten des Istiadezustandes über den Sollladezustand vorgenommen;
- zum Bestimmen des Sollladezustandes des Energiespeichers wird der Sollladezustand von einer Kennlinie, die Sollladezustandswerte in Abhängigkeit von Fahrgeschwindigkeitsgrößenwerten tabelliert oder über eine Funktion verknüpft, ermittelt;
- mittels der Steuereinheit wird bei einer Bremsung des Fahrzeuges eine Adaption der Kennlinie vorgenommen, wobei ein zum bei der Bremsung aktuellen Fahrgeschwindigkeitsgrößenwert zugehöriger Sollladezustandswert der Kennlinie mit einem von der Steuereinheit ermittelten Korrekturwert addiert wird, und der durch Addieren mit dem Korrekturwert erhöhte oder verminderte Sollladezustandswert als neuer Sollladezustandswert der Kennlinie beim aktuellen Fahrgeschwindigkeitsgrößenwert abgespeichert wird.

Erfindungsgemäß wird mittels eines Ladezustandsreglers ein Aufschalten eines Energieverbrauchers zur zumindest Teilentladung des Energiespeichers bei Überschreiten des Istladezustandes über den Sollladezustand vorgenommen.

Um die Verwendung eines kleinen Energiespeichers zu ermöglichen, ist die Hauptaufgabe des erfindungsgemäßen Ladezustandsregelverfahrens also nicht, einen bestimmten Mindestladezustand des Speichers zu gewährleisten.

Stattdessen gewährleistet das erfindungsgemäße Ladezustandsregelverfahren, dass der Istladezustand des Speichers stets auf den Sollladezustand zurück geführt wird. Der Zustand, dass der Istladezustand den Sollladezustand übersteigt, kann auftreten, wenn gerade der Energiespeicher durch eine Bremsung aufgeladen wurde und/oder nach einer Beschleunigung des Fahrzeuges, wenn der aktuelle Sollladezustand bei der durch die Beschleunigung erhöhten Fahrzeuggeschwindigkeit abgesunken ist. Der Istladezustand ist durch das Zurückführen auf den Sollladezustand bei entsprechender Bestimmung des Sollladezustandes des Energiespeichers in Abhängigkeit von dem Fahrgeschwindigkeitsgrößenwert stets so niedrig, dass anfallende Bremsenergie stets weitestgehend vom Energiespeicher aufgenommen werden kann.

Der Fahrgeschwindigkeitsgrößenwertabhängige Sollladezustand kann weiter so gewählt werden, dass zum Beispiel bei Fahrzeugstiltstand so viel Energie wie möglich im Energiespeicher vorgehalten wird, um gegebenenfalls die Verbrennungskraftmaschine des Hybridantriebes abstellen und die Hilfsbetriebe des Hybridantriebes, das heißt dessen Elektromotor, aus dem Energiespeicher versorgen zu können.

Durch das derart vorgenommene Begrenzen des Istladezustandes ist das erfindungsgemäße Verfahren dafür geeignet, bei Fahrzeugen mit Hybridantrieb mit relativ kleinen Energiespeichern eingesetzt zu werden. Es wird stets eine ausreichende Entladung des Speichers herbeigeführt, um eventuell anfallende Bremsenergie aufzunehmen. Dies wird mit einem stets möglichst hohen Ladezustand des Speichers kombiniert.

Dies ermöglicht es, elektrisch betriebene Hilfsbetriebe möglichst lange aus dem Energiespeicher und somit aus zurückgewonnener Bremsenergie zu betreiben, wodurch möglichst wenig Kraftstoff für den Betrieb dieser Hilfsbetriebe verwendet werden muss. Diese Eigenschaften machen das erfindungsgemäße Verfahren zur Ladezustandsregelung des Energiespeichers bei Fahrzeugen mit zum Beispiel Doppelschichtkondensatoren als Energiespeicher geeignet. Derartige Fahrzeuge weisen aufgrund der physikalischen Eigenschaften der Doppelschichtkondensatoren, gemessen an ihrer Fahrzeugmasse, nur eine relativ geringe maximale Energiespeicherkapazität im Energiespeicher auf. Weiter ist das Verfahren auch besonders zur Ladezustandsregelung des Energiespeichers in Nutzkraftfahrzeugen mit Hybridantrieb geeignet, da diese ebenfalls einen, bezogen auf ihre Fahrzeugmasse, kleinen Energiespeicher aufweisen, um die mögliche Zuladung nicht zu vermindern.

Bevorzugt wird als Energieverbraucher ein Elektromotor des Hybridantriebs aufgeschaltet. Dazu wird durch die Steuereinheit, das heißt zum Beispiel durch den Ladezustandsregler als Teil der Steuereinheit, festgestellt, ob eine Leistungsanforderung für den Hybridantrieb durch einen Fahrzeugführer vorliegt, das heißt ob der Fahrzeugführer Gas gibt. Wenn dies der Fall ist und der Istladezustand den Sollladezustand bei der aktuellen Fahrzeuggeschwindigkeit übersteigt, wird der Elektromotor des Hybridantriebs, zumindest bis der Istladezustand auf oder unter den jeweils bei aktueller Fahrzeuggeschwindigkeit durch die Steuereinheit zu bestimmenden Sollladezustand abgesunken ist, aufgeschaltet, das heißt der Elektromotor wird zur Unterstützung oder zum Ersatz des Verbrennungsmotors des Hybridantriebs betrieben. Dadurch wird anfallende Bremsenergie weitestgehend, das heißt abgesehen von Verlusten durch den physikalisch begrenzten Wirkungsgrad des Energiespeichers und der Steuereinheit sowie des Hybridantriebes selbst, zum Antreiben des Fahrzeuges wiederverwendet.

Zum Bestimmen des Sollladezustandes des Energiespeichers wird der Sollladezustand von einer Kennlinie, die Sollladezustandswerte in Abhängigkeit von Fahrgeschwindigkeitsgrößenwerten tabelliert oder über eine Funktion verknüpft, ermittelt. Eine derartige Kennlinie kann besonders einfach ermittelt und bei Bedarf modifiziert werden.
Dabei ist die Kennlinie besonders vorteilhaft derart ausgelegt, dass eine von den Fahrgeschwindigkeitsgrößenwerten abhängige Bremsenergie bei jeder Fahrgeschwindigkeit vom Energiespeicher aufnehmbar ist, so dass stets sichergestellt ist, dass beim Bremsen so wenig wie möglich Energie verloren geht, was zu einer Optimierung des Kraftstoffverbrauchs des Fahrzeuges führt.

Bei dem erfindungsgemäßen Verfahren wird mittels der Steuereinheit bei einer Bremsung des Fahrzeuges eine Adaption der Kennlinie durch zumindest eines der nachfolgend beschriebenen Adaptionsverfahren vorgenommen. Dabei wird ein Sollladezustandswert der Kennlinie, der bei der Bremsung zum aktuellen Fahrgeschwindigkeitsgrößenwert zugehört, mit einem von der Steuereinheit ermittelten Korrekturwert addiert und der durch Addieren mit dem Korrekturwert erhöhte oder verminderte Sollladezustandswert als neuer Sollladezustandswert der Kennlinie beim aktuellen Fahrgeschwindigkeitsgrößenwert abgespeichert. Dadurch ist zum Beispiel eine Anpassung der Kennlinie an einen besonderen Fahrstil eines Fahrzeugführers durch die Steuereinheit selbsttätig möglich. Die Steuereinheit lernt dadurch selbsttätig eine optimale Verwaltung der Energie des Energiespeichers.

Wenn zum Beispiel Fahrzeuge, wie beispielsweise Stadtbusse im Linienverkehr, ein und dieselbe Strecke mehrfach durchfahren, kann eine streckenangepasste Kennlinie den Kraftstoffverbrauch des Fahrzeuges optimieren. Dabei kann sich nämlich durch die Adaption die Sollladezustandskennlinie selbsttätig so einstellen, dass die Streckentopografie sich darin widerspiegelt.

Die Kennlinie, mit welcher jedem Fahrgeschwindigkeitsgrößenwert ein Sollladezustandswert zugeordnet wird, kann beispielsweise aus einer Vielzahl von Segmenten, insbesondere Geraden, zusammengesetzt sein, wobei zur Korrektur der Kennlinie beziehungsweise der Sollladezustandswerte die einzelnen Segmente hin zu einem größeren Sollladezustandswert oder hin zu einem kleineren Sollladezustandswert verschoben werden, insbesondere parallel verschoben werden. Beispielsweise wird der Anfang und das Ende des einzelnen Segments beziehungsweise der einzelnen Geraden jeweils durch ein Wertepaar, bestehend aus dem entsprechenden Sollladezustandswert und der Fahrgeschwindigkeit, gebildet. Durch Addieren des Korrekturwertes wird der Sollladezustandswert der beiden Wertepaare erhöht oder vermindert, wobei der jeweilige Fahrgeschwindigkeitsgrößenwert beibehalten wird. Da vorteilhaft ein Wertepaar eines Endes einer solchen Geraden beziehungsweise eines solchen Segmentes zugleich das Wertepaar am Anfang der nächstliegenden (benachbarten) Geraden beziehungsweise Segmentes ist, hat das Verschieben einer einzelnen Geraden beziehungsweise eines einzelnen Segmentes auch einen Einfluss auf die beiden benachbarten Segmente beziehungsweise Geraden. Diese beiden benachbarten Segmente beziehungsweise Geraden erhalten nämlich durch das Verschieben des zwischen ihnen eingeschlossenen Segmentes beziehungsweise der zwischen ihnen eingeschlossenen Geraden eine veränderte Steigung, da nur einer ihrer Endpunkte verschoben wird.

Zur Ermittlung des Korrekturwertes bei der Adaption der Kennlinie werden bevorzugt folgende Verfahrensschritte durchgeführt:
- Ermitteln eines Sollladezustandsdifferenzwertes aus dem Sollladezustandswert beim aktuellen Fahrgeschwindigkeitsgrößenwert am Anfang der Bremsung und einem Endsollladezustandswert bei einem Endfahrgeschwindigkeitsgrößenwert am Ende der Bremsung;
- Ermitteln eines Istladezustandsdifferenzwertes aus dem Istladezustandswert am Anfang der Bremsung und einem Endistladezustandswert des Energiespeichers am Ende der Bremsung;
- Vergleich des Sollladezustandsdifferenzwertes mit dem Istladezustandsdifferenzwert;
- Festlegung des Korrekturwertes zu einem Absenken der Kennlinie derart, dass der neue Sollladezustandswert kleiner ist als der alte Sollladezustandswert wenn der Istladezustandsdifferenzwert größer ist als der Sollladezustandsdifferenzwert oder
- Festlegung des Korrekturwertes zu einem Anheben der Kennlinie derart, dass der neue Sollladezustandswert größer ist als der alte Sollladezustandswert wenn der Istladezustandsdifferenzwert kleiner ist als der Sollladezustandsdifferenzwert.

Dadurch wird automatisch von der Steuereinheit die Kennlinie derart angepasst, dass, wenn der tatsächliche Bremsenergierückgewinn, der durch den Istladezustandsdifferenzwert beziffert wird, größer ist als der in der Kennlinie abgelegte Bremsenergierückgewinn, der durch den Sollladezustandsdifferenzwert beziffert wird, für eine nachfolgende Bremsung unter gleichen Bremsbedingungen, das heißt gleiche Anfangs- und Endgeschwindigkeit, die gesamte Bremsenergie im Energiespeicher gespeichert werden kann. Demzufolge wird die Kennlinie, das heißt der Sollladezustandswert, bei der Fahrgeschwindigkeit des Bremsbeginns abgesenkt. Ist umgekehrt die Differenz der Istladezustände kleiner als die der Sollladezustände, so ist der tatsächliche Bremsenergierückgewinn kleiner als der in der Kennlinie angenommene. Demzufolge wird die Kennlinie, das heißt der Sollladezustandswert, bei der Fahrgeschwindigkeit des Bremsbeginns angehoben, wodurch die im Energiespeicher vorhandene Energie, die zum Beispiel für ein Anfahren zur Verfügung steht, maximiert wird, ohne unter gleichen Bremsbedingungen anfallende Bremsenergie durch einen bereits zu stark aufgeladenen Energiespeicher zu verlieren.

Bei einer Festlegung des Korrekturwertes zum Absenken der Kennlinie werden zu größeren Fahrgeschwindigkeitsgrößenwerten als dem aktuellen Fahrgeschwindigkeitsgrößenwert zugehörige Sollladezustandswerte der Kennlinie vorteilhaft auf den neuen Sollladezustandswert vermindert, wenn die zu den größeren Fahrgeschwindigkeitsgrößenwerten zugehörigen Sollladezustandswerte größer als der neue Sollladezustandswert sind; und
bei einer Festlegung des Korrekturwertes zum Anheben der Kennlinie werden zu kleineren Fahrgeschwindigkeitsgrößenwerten als dem aktuellen Fahrgeschwindigkeitsgrößenwert zugehörige Sollladezustandswerte der Kennlinie vorteilhaft auf den neuen Sollladezustandswert erhöht, wenn die zu den kleineren Fahrgeschwindigkeitsgrößenwerten zugehörigen Sollladezustandswerte kleiner als der neue Sollladezustandswert sind.

Es wird also bei einer Absenkung der Kennlinie bei einer Fahrgeschwindigkeit auch geprüft, ob die Kennlinie bei größeren Fahrgeschwindigkeiten noch irgendwo größere Sollladezustandswerte aufweist als den neuen, abgesenkten Sollladezustandswert. Falls ja, werden alle Sollladezustandswerte der Kennlinie, die bei größeren Fahrgeschwindigkeiten einen größeren Sollladezustandswert aufweisen als der neue, abgesenkte Sollladezustandswert, auf den neuen, abgesenkten Sollladezustandswert mit abgesenkt. Umgekehrt wird bei einer Erhöhung der Kennlinie bei einer Fahrgeschwindigkeit auch geprüft, ob bei kleineren Fahrgeschwindigkeiten Bereiche der Kennlinie kleinere Sollladezustandswerte als den neuen, vergrößerten Sollladezustandswert aufweisen. Falls ja, werden diese Sollladezustandswerte der Kennlinie mit auf den vergrößerten Sollladezustandswert erhöht.

Bei einer Absenkung wird nicht einfach die ganze Kennlinie beziehungsweise die zuvor beschriebenen Kennliniensegmente hin zu größeren Fahrgeschwindigkeiten mit abgesenkt und bei einer Erhöhung wird nicht einfach die ganze Kennlinie hin zu kleineren Fahrgeschwindigkeiten mit angehoben, da sonst die ganze Kennlinie beziehungsweise die Kennliniensegmente nach einigen Bremsungen, das heißt der Vornahme einiger Adaptionen, immer steiler würde, und schließlich zu einer Sprungfunktion entarten würde. Vielmehr werden immer nur jene einzelne Werte beziehungsweise Anfangspunkte und/oder Endpunkte (Wertepaare) der einzelnen Segmente angehoben oder abgesenkt, welche entsprechend kleiner oder größer als der neue Sollladezustandswert sind, wohingegen gleich große oder bei einer Erhöhung bereits größere beziehungsweise bei einer Absenkung bereits kleinere Sollladezustandswerte der Kennlinie beibehalten werden.

Dadurch wird bei der Adaption der Kennlinie berücksichtigt, dass bei einer Bremsung aus einer höheren Fahrgeschwindigkeit niemals weniger Bremsenergie zu erwarten ist als bei einer Bremsung aus einer niedrigeren Fahrgeschwindigkeit. Daraus kann geschlossen werden, dass die Maximal-Ladezustandskennlinie über der Fahrgeschwindigkeit hin zu größeren Fahrgeschwindigkeiten niemals ansteigen kann, und umgekehrt hin zu niedrigeren Fahrgeschwindigkeiten niemals abfallen kann. Das Lernen der optimalen Energieverwaltung des Energiespeichers durch die Steuereinheit wird somit beschleunigt, so dass bereits nach wenigen Bremsungen eine zu den Fahrzeugbetriebsumständen passende Kennlinie zur Verfügung steht.

Wenn der Absolutwert des Korrekturwertes durch Multiplikation einer Differenz zwischen dem Sollladezustandsdifferenzwert und dem Istladezustandsdifferenzwert mit einem Lernfaktor ermittelt wird, kann durch Auswahl des Lemfaktors bestimmt werden, wie schnell, das heißt nach welcher Anzahl von Bremsungen, eine vorher festgelegte Kennlinie vollständig an Fahrzeugbetriebsumstände angepasst ist. Dabei wird der Lemfaktor bevorzugt kleiner als eins gewählt um ein Unterrelaxaktionsverfahren zu realisieren, wodurch die Gefahr, dass eine Bremsung unter besonders außergewöhnlichen Umständen zu einer Verschlechterung der Kennlinie führt, vermindert wird.

Der Lernfaktor bei Festlegung des Korrekturwertes zum Absenken der Kennlinie unterscheidet sich bevorzugt betragsmäßig vom Lernfaktor bei Festlegung des Korrekturwertes zum Anheben der Kennlinie. Der Lemfaktor kann dazu zum Beispielvom Vorzeichen der Differenz zwischen dem Sollladezustandsdifferenzwert und dem Istladezustandsdifferenzwert abhängig gemacht werden. Dabei ist der Lemfaktor bei Absenken der Kennlinie bevorzugt größer als bei Anheben der Kennlinie.

Hierdurch kann erreicht werden, dass die Kennlinie des Sollladezustandes sehr rasch abgesenkt wird, wenn bei einer Bremsung mehr Energie zurückgewonnen werden kann, als es der Kennlinie entspricht; andererseits wird die Kennlinie nur sehr langsam wieder erhöht, wenn weniger Energie zurückgewonnen wird, als es der Kennlinie entspricht. Dies erlaubt es, die Kennlinie nach Wunsch mehr an Mittelwerten, Minimalwerten oder aber Maximalwerten der zurückgewonnenen Bremsenergie auszurichten und somit die Forderung nach stets vollständig möglicher Speicherung des Energierückgewinns im Energiespeicher, und die Forderung nach möglichst hohem Energieinhalt im Energiespeicher, zum Beispielzum Verwenden beim Anfahren des Fahrzeuges, bei der Adaption der Kennlinie gegeneinander abgewogen zu berücksichtigen.

Eine erfindungsgemäße Steuereinheit zur Regelung des Ladezustandes eines Energiespeichers für ein Fahrzeug mit Hybridantrieb ist eingerichtet, das erfindungsgemäße Verfahren durchzuführen und/oder zu steuern. Die Steuereinheit ist zum Bestimmen eines Sollladezustandes des Energiespeichers in Abhängigkeit von einem, von einer Fahrgeschwindigkeitserfassungseinrichtung erfassbaren Fahrgeschwindigkeitsgrößenwert des Fahrzeuges und zum Vergleichen eines von Ladezustandserfassungsmitteln erfassbaren Istladezustandes des Energiespeichers mit dem Sollladezustand eingerichtet. Erfindungsgemäß weist die Steuereinheit einen Ladezustandsregler auf, wobei der Ladezustandsregler zum Aufschalten eines Energieverbrauchers zur zumindest Teilentladung des Energiespeichers bei Überschreiten des Istladezustandes über den Sollladezustand eingerichtet ist. Durch die Teilentladung wird der Istladezustand insbesondere zumindest auf den Solladezustand zurückgeführt. Das Aufschalten des Energieverbrauchers kann also durch den Ladezustandsregler bei Erreichen des Solladezustandes durch den Istladezustand wieder beendet werden.

Mittels der erfindungsgemäßen Steuereinheit ist das erfindungsgemäße Verfahren durchführbar. Somit werden die Vorteile des erfindungsgemäßen Verfahrens durch die Steuereinheit zur Verfügung gestellt.

Der Ladezustandsregler ist bevorzugt dazu eingerichtet, als Energieverbraucher einen Elektromotor des Hybridantriebs aufzuschalten, so dass die bei der Teilentladung aus dem Energiespeicher entnommene Energie zum Antrieb des Fahrzeuges verwendet wird. Dazu wird das Teilentladen und damit das Aufschalten des Elektromotors erst vorgenommen, wenn durch einen Fahrzeugführer eine Leistungsanforderung für den Hybridantrieb vorgenommen wird.

Die Steuereinheit umfasst einen Speicher, wobei in dem Speicher eine Kennlinie abgelegt ist, die Sollladezustandswerte in Abhängigkeit von Fahrgeschwindigkeitsgrößenwerten tabelliert. Dabei ist die Steuereinheit zum Bestimmen des Sollladezustandes des Energiespeichers durch Ermitteln des Sollladezustand von der Kennlinie eingerichtet. Die Kennlinie ist vorteilhaft derart ausgelegt, dass eine von den Fahrgeschwindigkeitsgrößenwerten abhängige Bremsenergie bei jeder Fahrgeschwindigkeit vom Energiespeicher aufnehmbar ist, um bei jeder Bremsung die freiwerdende Bremsenergie durch den Energiespeicher aufnehmen zu können.

Die Steuereinheit ist eingerichtet, bei einer Bremsung des Fahrzeuges eine Adaption der Kennlinie nach einem der beschriebenen Adaptionsverfahren durchzuführen, um die Energieverwaltung des Energiespeichers durch die Steuereinheit an wiederholt auftretende Fahrzeugbetriebsumstände anzupassen.

Ein erfindungsgemäßes Fahrzeug weist einen Hybridantrieb auf sowie einen Energiespeicher, eine Fahrgeschwindigkeitserfassungseinrichtung, eingerichtet zum Erfassen eines Fahrgeschwindigkeitsgrößenwerts des Fahrzeuges, und Ladezustandserfassungsmittel, eingerichtet zum Erfassen eines Istladezustandes des Energiespeichers. Weiter ist in dem Fahrzeug eine erfindungsgemäße Steuereinheit vorgesehen.

Das erfindungsgemäße Fahrzeug kann als Energiespeicher einen Energiespeicher mit einer maximalen Energiespeicherkapazität im Bereich einer maximalen Bremsenergie des Fahrzeuges bei einer Fahrzeughöchstgeschwindigkeit aufweisen. Der Energiespeicher kann also, relativ zu herkömmlich bei hybridangetriebenen Fahrzeugen verwendeten Energiespeichern, eine sehr geringe maximale Energiespeicherkapazität aufweisen. Derartige kleine Energiespeicher vermindern zum Beispiel das Fahrzeuggewicht. Als Energiespeicher kann zum Beispielein Kondensator verwendet werden, welcher sehr viel weniger verschleißt als ein herkömmlich bei hybridangetriebenen Fahrzeugen verwendeter Energiespeicher.

Besonders vorteilhaft ist der Energiespeicher als Mehrschicht-, bevorzugt als Doppelschichtkondensator ausgeführt. Derartige Kondensatoren zeichnen sich durch eine hohe maximale Energiespeicherkapazität pro Kondensatorgewicht aus.

Die Erfindung soll nachfolgend anhand eines Ausführungsbeispiels und den beigefügten Figuren exemplarisch erläutert werden.

Es zeigen:
- Figur 1: ein Fahrzeug mit einer erfindungsgemäßen Steuereinheit, eingerichtet zur Durchführung einer bevorzugten Ausführungsform des erfindungsgemäßen Verfahrens.
- Figur 2: eine Möglichkeit einer Gestaltung einer aus einzelnen Segmenten beziehungsweise Geraden zusammengesetzten Kennlinie.

Die Figuren der Zeichnung zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau beziehungsweise ihre Funktion gut gezeigt werden kann.

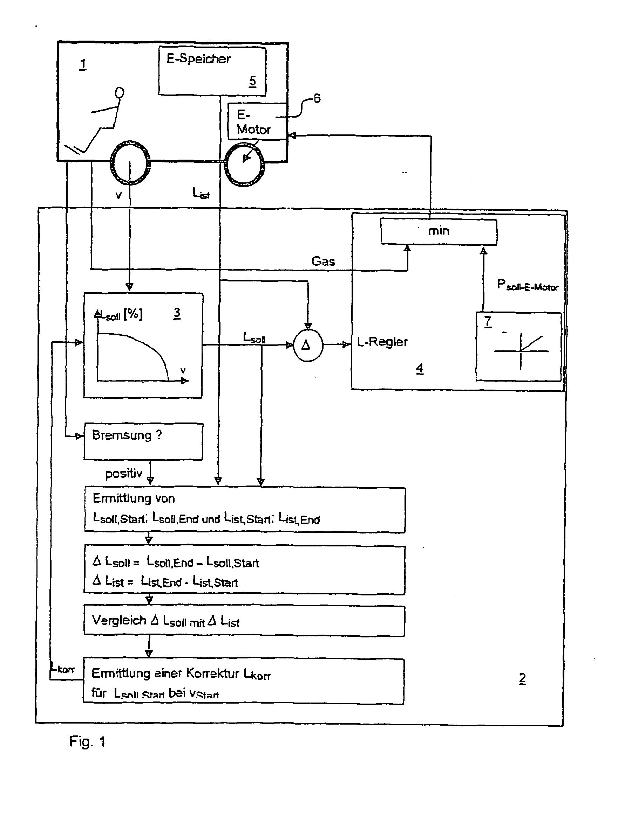

In der Figur 1 ist ein erfindungsgemäßes Fahrzeug 1 schematisch dargestellt. Am Fahrzeug 1 ist eine erfindungsgemäße Steuereinheit 2 dargestellt, die lediglich zur Erhöhung der Übersichtlichkeit der Figur außerhalb des Fahrzeuges 1 dargestellt ist. Die Steuereinheit 2 ist zur Durchführung einer bevorzugten Ausführungsform des erfindungsgemäßen Verfahrens eingerichtet. Die die dargestellten Fahrzeug- und/oder Steuereinheitkomponenten verbindenden Pfeile symbolisieren Informationsflüsse während der Durchführung des erfindungsgemäßen Verfahrens.

Das Fahrzeug 1 weist einen Energiespeicher 5 und einen Hybridantrieb mit einem Elektromotor 6 auf. Um zu gewährleisten, dass einerseits in dem Energiespeicher 5 zu jeder Zeit so viel Energie wie möglich vorhanden ist und andererseits trotzdem anfallende Bremsenergie mit höchster Wahrscheinlichkeit aufgenommen werden kann, ist in einem Informationsspeicher 3 der Steuereinheit 2 eine Fahrgeschwindigkeitsabhängige Funktion eines Sollladezustands Lₛₒₗₗ gespeichert, die zum Beispiel als Kennlinie realisiert ist. Diese Funktion stellt im Unterschied zu bekannten Verfahren zur Regelung des Ladezustandes des Energiespeichers 5 für ein Fahrzeug 1 mit Hybridantrieb keine Mindest-, sondern vielmehr eine Höchstladezustandsfunktion dar. Die Kennlinie stellt einen Sollladezustand Lₛₒₗₗ als Prozentsatz einer maximalen Energiespeicherkapazität des Energiespeichers 5 über der Fahrgeschwindigkeit v bzw. von Fahrgeschwindigkeitsgrößenwerten dar.

Bei dem erfindungsgemäßen Verfahren wird bei der momentanen Fahrgeschwindigkeit v, die als Fahrgeschwindigkeitsgrößenwert von einer Fahrgeschwindigkeitserfassungseinrichtung bereit gestellt wird, aus der von der Fahrgeschwindigkeit v abhängigen Kennlinie ein augenblicklicher Sollladezustand Lₛₒₗₗ ermittelt, der angibt, wie weit der Energiespeicher 5 bei dieser Fahrgeschwindigkeit v entladen sein muss, damit er die Energie einer Bremsung aus dieser Fahrgeschwindigkeit v bis zum Stillstand des Fahrzeuges 1 aufnehmen kann. Ein Istladezustand Lᵢₛₜ des Energiespeichers 5, also der momentan tatsächliche Ladezustand des Energiespeichers 5, wird von Ladezustandserfassungsmitteln, die beispielsweise direkt im Energiespeicher 5 oder in der Steuereinheit 2 angeordnet sein können, erfasst und für einen von der Steuereinheit 2 vorzunehmenden Vergleich mit dem Sollladezustand Lₛₒₗₗ bereit gestellt.

Dazu wird zum Beispieleine Differenz Δ aus dem Istladezustand Lᵢₛₜ und dem Sollladezustand Lₛₒₗₗ gebildet. Liegt der Istladezustand Lᵢₛₜ des Energiespeichers 5 über diesem Sollladezustand Lₛₒₗₗ, dann sorgt ein Ladezustandsregler 4 dafür, dass, sobald der Fahrer Leistung von der Verbrennungskraftmaschine anfordert, also Gas gibt, die elektrische Maschine, also der Elektromotor 6 des Hybridantriebs, aufgeschaltet wird, das heißt den Energiespeicher 5 entlädt und damit einen entsprechend großen Anteil der Leistung der Verbrennungskraftmaschine ersetzt, so dass der tatsächliche Ladezustand des Energiespeichers 5 auf den Sollladezustand Lₛₒₗₗ zurückgeführt wird.

Der Ladezustandsregler 4 regelt dabei zum Beispiel in Abhängigkeit von der Differenz Δ und von der Größe der Leistungsanforderung durch den Fahrer die vom Elektromotor 6 abzugebende Leistung. Beispielsweise wird über eine, zum Beispiel über der Differenz Δ tabellierte, das heißt in einem Speicher des 4 gespeicherte, Elektromotorleistungsfunktion 7 eine Sollleistung P_{soll-E-Motor} ermittelt. Das Minimum aus P_{soll-E-Motor} und der angeforderten Leistung wird dann als vom Elektromotor 6 zu erbringende Leistung durch den Ladezustandsregler 4 vom Elektromotor 6 angefordert.

Liegt der tatsächliche Ladezustand des Energiespeichers 5 unter dem aus der Kennlinie bestimmten Solliadezustand Lₛₒₗₗ, so nimmt der Ladezustandsregler 4 keinen Einfluss auf den Ladezustand des Energiespeichers 5, da der Energiespeicher 5 die bei der nächsten Bremsung anfallende Energie aller Wahrscheinlichkeit nach aufnehmen kann.

Alternativ oder zusätzlich können andere Verfahren zur Verminderung des Istladezustands Lᵢₛₜ des Energiespeichers 5 durchgeführt werden. Beispielsweise können dabei Konzepte zum elektrischen Betrieb von Nebenverbrauchern oder aber Verfahren zur Erhöhung des Wirkungsgrades einer Verbrennungskraftmaschine durch Lastpunktverschiebung herangezogen werden.

Die schematisch dargestellte Steuereinheit 2 ist zur Adaption der den Sollladezustand Lₛₒₗₗ als Funktion der Fahrgeschwindigkeit v tabellierenden Kennlinie eingerichtet. Die Steuereinheit 2 führt dabei die Kennlinie aufgrund von ermittelten, tatsächlich auftretenden Bremsenergien permanent nach. Dabei wird zunächst ständig überwacht, ob eine Bremsung begonnen wird. Wenn ja, das heißt bei positivem Überwachungsergebnis, werden der zu dem Zeitpunkt des Bremsbeginns aus der Kennlinie ermittelte Sollladezustand L_{soll,Start} und der tatsächliche Istladezustand L_{ist,Start} des Energiespeichers 5 ermittelt und gespeichert.

Wenn die Bremsung beendet wird, werden der aus der Kennlinie ermittelte Sollladezustand L_{soll,End} und der tatsächliche Istladezustand L_{ist,End} des Energiespeichers 5 zum Zeitpunkt des Bremsendes ermittelt. Aus diesen vier Werten wird dann zum einen ein Sollladezustandsdifferenzwert ΔLₛₒₗₗ als die Differenz der beiden Sollladezustände von Bremsende L_{soll,End} und Bremsbeginn L_{soll,Start} und zum anderen ein Istladezustandsdifferenzwert ΔLᵢₛₜ als die Differenz der Istladezustände von Bremsende L_{ist,End} und Bremsbeginn L_{ist,Start} berechnet. Anschließend werden diese beiden Differenzen verglichen.

Ist der Istladezustandsdifferenzwert ΔLᵢₛₜ größer als der Sollladezustandsdifferenzwert ΔLₛₒₗₗ, so ist der tatsächliche Bremsenergierückgewinn größer als der in der Kennlinie abgelegte. Demzufolge wird die Kennlinie bei der Geschwindigkeit des Bremsbeginns abgesenkt. Ist umgekehrt die Differenz der Ist-Ladezustände kleiner als die der Sollladezustände, so ist der tatsächliche Bremsenergierückgewinn kleiner als der in der Kennlinie angenommene. Demzufolge wird die Kennlinie bei der Geschwindigkeit des Bremsbeginns angehoben. Die Korrektur der Kennlinie erfolgt durch eine Ermittlung eines Korrekturwertes Lₖₒᵣᵣ für den Wert von Lₛₒₗₗ bei der Fahrgeschwindigkeit vₛₜₐᵣₜ und durch Addieren des Korrekturwertes Lₖₒᵣᵣ mit Lₛₒₗₗ und Abspeichern des Ergebnisses als neuen Wert Lₛₒₗₗ in der Kennlinie.
Die Veränderung, das heißt die Adaption durch Absenkung beziehungsweise Anhebung, der Kennlinie kann zum Beispiel dergestalt vorgenommen werden, dass eine Differenz zwischen dem Sollladezustandsdifferenzwert ΔLₛₒₗₗ und dem Istladezustandsdifferenzwert ΔLᵢₛₜ mit einem Faktor k, das heißt einem Lemfaktor, multipliziert wird, um einen Korrekturwert für den Wert von Lₛₒₗₗ bei der Fahrgeschwindigkeit vₛₜₐᵣₜ der Kennlinie zu ermitteln. Der Lernfaktor wird hierbei vorzugsweise kleiner als 1 gewählt, um ein sogenanntes Unterrelaxationsverfahren zu realisieren.

Dazu wird insbesondere folgender Algorithmus durchgeführt:
Falls ΔLᵢₛₜ > Lₛₒₗₗ, also zu viel Bremsenergie vorhanden ist, das heißt die freie Energiespeicherkapazität des Energiespeichers nicht zur Aufnahme der Bremsenergie ausreichen würde, wird Lₖₒᵣᵣ = k₁(ΔLₛₒₗₗ - ΔLᵢₛₜ) gewählt.
Falls ΔLᵢₛₜ < Lₛₒₗₗ also zu wenig Bremsenergie vorhanden ist, wird Lₖₒᵣᵣ = k₂(ΔLₛₒₗₗ - ΔLᵢₛₜ) gewählt. Dabei gilt im Falle eines Unterrelaxationsverfahrens für die Lernfaktoren k₁ und/oder k₂< 1. Es kann sinnvoll sein, k₂ << k₁ zu wählen.

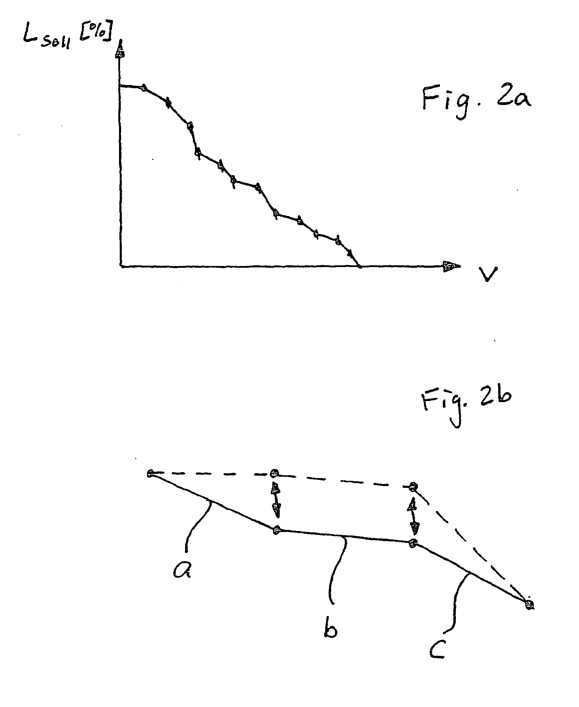

In der Figur 2 ist eine mögliche Gestaltung einer Kennlinie dargestellt. Wie man sieht, ist die Kennlinie, welche den Sollladezustand über der Fahrgeschwindigkeit beschreibt, aus einer Vielzahl von aneinander angeschlossenen Geraden zusammengesetzt. Der Verlauf jeder Geraden wird durch zwei Wertepaare bestimmt, nämlich ein erstes Wertepaar der Fahrgeschwindigkeit v und des Sollladezustandes Lₛₒₗₗ am Anfang der Geraden und ein zweites Wertepaar aus Fahrgeschwindigkeit v und Sollladezustand Lₛₒₗₗ am Ende der Geraden. Das Wertepaar am Ende einer Geraden ist zugleich das Wertepaar am Anfang der nächsten Geraden, betrachtet im Verlauf der Kennlinie von links nach rechts, das heißt von kleineren Fahrgeschwindigkeiten hin zu größeren Fahrgeschwindigkeiten. Dies wird besonders aus der Figur 2a deutlich.

Die Figur 2b zeigt einen Ausschnitt aus der Kennlinie der Figur 2a mit drei Segmenten a, b, c. Wenn nun aufgrund der Adaption bei einer bestimmten Geschwindigkeit das Segment b parallelverschoben wird, so bleibt zwar die Steigung des Segmentes beziehungsweise der Geraden b konstant, die Steigungen der benachbarten Segmente beziehungsweise Geraden a und c ändern sich jedoch. Wenn die Gerade b nach oben verschoben wird, so wird bei der gezeigten zu größeren Fahrgeschwindigkeiten hin insgesamt abfallenden Kennlinie die Steigung der Geraden a geringer, wohingegen die Steigung der Geraden c größer wird. Dabei wird die Gerade bei gemäß der beschriebenen Adaption immer dann parallel verschoben, wenn bei einem Fahrgeschwindigkeitswert v, welcher auf der Geraden b liegt, der Sollladezustandswert Lₛₒₗₗ gemäß des beschriebenen Verfahrens als zu klein oder zu groß bewertet wurde.

Bei der beschriebenen Korrektur aller Sollladezustandskennwerte bei größeren Fahrgeschwindigkeiten, sofern die Gerade nach unten verschoben wurde, beziehungsweise bei kleineren Fahrgeschwindigkeiten, sofern die Gerade nach oben verschoben wurde, werden in diesen "nachgeführten" Bereichen der Kennlinie die einzelnen Geraden nicht parallel verschoben, sondern ändern ihre Steigung, da nur eines der beiden Wertepaare an ihren Enden auf den neuen Sollladezustandswert korrigiert wird beziehungsweise die Korrektur unterschiedlich stark ausfällt. Es gibt dabei eine Ausnahme, nämlich wenn das entsprechende Segment beziehungsweise die entsprechende Gerade zuvor waagerecht verlief und somit beide Wertepaare im gleichen Umfang korrigiert werden.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen. Der Schutzumfang wird durch die Ansprüche festgelegt.

## Patentansprüche

1. Verfahren zur Regelung des Ladezustandes eines Energiespeichers (5) für ein Fahrzeug (1) mit Hybridantrieb mit den Verfahrensschritten:
1.1 Erfassen eines Fahrgeschwindigkeitsgrößenwertes des Fahrzeuges (1) mittels einer Fahrgeschwindigkeitserfassungseinrichtung und Bestimmen eines Sollladezustandes des Energiespeichers (5) in Abhängigkeit von dem Fahrgeschwindigkeitsgrößenwert durch eine Steuereinheit (2);
1.2 Erfassen eines Istladezustandes des Energiespeichers (5) mittels Ladezustandserfassungsmitteln; und
1.3 Vergleichen des Istladezustandes mit dem Sollladezustand durch die Steuereinheit (2);
1.4 mittels eines Ladezustandsreglers (4) wird ein Aufschalten eines Energieverbrauchers zur zumindest Teilentladung des Energiespeichers (5) bei Überschreiten des Istladezustandes über den Sollladezustand vorgenommen;
1.5 zum Bestimmen des Sollladezustandes des Energiespeichers (5) wird der Sollladezustand von einer Kennlinie, die Sollladezustandswerte in Abhängigkeit von Fahrgeschwindigkeitsgrößenwerten tabelliert oder über eine Funktion verknüpft, ermittelt;
**dadurch gekennzeichnet, dass**
1.6 mittels der Steuereinheit (2) bei einer Bremsung des Fahrzeuges (1) eine Adaption der Kennlinie vorgenommen wird, wobei ein zum bei der Bremsung aktuellen Fahrgeschwindigkeitsgrößenwert zugehöriger Sollladezustandswert der Kennlinie mit einem von der Steuereinheit (2) ermittelten Korrekturwert addiert wird, und der durch Addieren mit dem Korrekturwert erhöhte oder verminderte Sollladezustandswert als neuer Sollladezustandswert der Kennlinie beim aktuellen Fahrgeschwindigkeitsgrößenwert abgespeichert wird.

2. Verfahren gemäß Anspruch 1, **dadurch gekennzeichnet, dass** als Energieverbraucher ein Elektromotor (6) des Hybridantriebs aufgeschaltet wird.

3. Verfahren gemäß Anspruch 1, **dadurch gekennzeichnet, dass** zur Ermittlung des Korrekturwertes folgende Verfahrensschritte durchgeführt werden:
3.1 Ermitteln eines Sollladezustandsdifferenzwertes aus dem Sollladezustandswert beim aktuellen Fahrgeschwindigkeitsgrößenwert am Anfang der Bremsung und einem Endsollladezustandswert bei einem Endfahrgeschwindigkeitsgrößenwert am Ende der Bremsung;
3.2 Ermitteln eines Istladezustandsdifferenzwertes aus dem Istladezustandswert am Anfang der Bremsung und einem Endistladezustandswert des Energiespeichers (5) am Ende der Bremsung;
3.3 Vergleich des Sollladezustandsdifferenzwertes mit dem Istladezustandsdifferenzwert;
3.4 Festlegung des Korrekturwertes zu einem Absenken der Kennlinie für eine nachfolgende Bremsung unter gleichen Bremsbedingungen derart, dass der neue Sollladezustandswert kleiner ist als der alte Sollladezustandswert, wenn der Istladezustandsdifferenzwert größer ist als der Sollladezustandsdifferenzwert; oder Festlegung des Korrekturwertes zu einem Anheben der Kennlinie für eine nachfolgende Bremsung unter gleichen Bremsbedingungen derart, dass der neue Sollladezustandswert größer ist als der alte Sollladezustandswert, wenn der Istladezustandsdifferenzwert kleiner ist als der Sollladezustandsdifferenzwert.

4. Verfahren gemäß Anspruch 3, **dadurch gekennzeichnet, dass** bei einer Festlegung des Korrekturwertes zum Absenken der Kennlinie, zu größeren Fahrgeschwindigkeitsgrößenwerten als dem aktuellen Fahrgeschwindigkeitsgrößenwert zugehörige Sollladezustandswerte der Kennlinie auf den neuen Sollladezustandswert vermindert werden, wenn die zu den größeren Fahrgeschwindigkeitsgrößenwerten zugehörigen Sollladezustandswerte größer als der neue Sollladezustandswert sind; und bei einer Festlegung des Korrekturwertes zum Anheben der Kennlinie, zu kleineren Fahrgeschwindigkeitsgrößenwerten als dem aktuellen Fahrgeschwindigkeitsgrößenwert zugehörige Sollladezustandswerte der Kennlinie auf den neuen Sollladezustandswert erhöht werden, wenn die zu den kleineren Fahrgeschwindigkeitsgrößenwerten zugehörigen Sollladezustandswerte kleiner als der neue Sollladezustandswert sind.

5. Verfahren gemäß einem der Ansprüche 3 oder 4, **dadurch gekennzeichnet, dass** der Absolutwert des Korrekturwertes durch Multiplikation einer Differenz zwischen dem Sollladezustandsdifferenzwert und dem Istladezustandsdifferenzwert mit einem Lemfaktor ermittelt wird, wobei bevorzugt der Lernfaktor kleiner als eins gewählt wird.

6. Verfahren gemäß Anspruch 5, **dadurch gekennzeichnet, dass** der Lemfaktor bei Festlegung des Korrekturwertes zum Absenken der Kennlinie sich betragsmäßig vom Lernfaktor bei Festlegung des Korrekturwertes zum Anheben der Kennlinie unterscheidet, wobei bevorzugt der Lemfaktor bei Absenken der Kennlinie größer als bei Anheben der Kennlinie ist.

7. Steuereinheit (2) zur Regelung des Ladezustandes eines Energiespeichers (5) für ein Fahrzeug (1) mit Hybridantrieb, eingerichtet
7.1 zum Bestimmen eines Sollladezustandes des Energiespeichers (5) in Abhängigkeit von einem, von einer Fahrgeschwindigkeitserfassungseinrichtung erfassbaren Fahrgeschwindigkeitsgrößenwert des Fahrzeuges (1); und
7.2 zum Vergleichen eines von Ladezustandsertassungsmitteln erfassbaren Istladezustandes des Energiespeichers (5) mit dem Sollladezustand;
7.3 die Steuereinheit weist einen Ladezustandsregler (4) auf, wobei der Ladezustandsregler (4) zum Aufschalten eines Energieverbrauchers zur zumindest Teilentladung des Energiespeichers bei Überschreiten des Istladezustandes über den Sollladezustand eingerichtet ist;
7.4 die Steuereinheit umfasst einen Informationsspeicher (3), wobei in dem Informationsspeicher (3) eine Kennlinie abgelegt ist, die Sollladezustandswerte in Abhängigkeit von Fahrgeschwindigkeitsgrößenwerten tabelliert oder über eine Funktion verknüpft;
7.5 die Steuereinheit (2) ist zum Bestimmen des Sollladezustandes des Energiespeichers (5) durch Ermitteln des Sollladezustands von der Kennlinie eingerichtet;
**gekennzeichnet durch** das folgende Merkmal:
die Steuereinheit (2) ist bei einer Bremsung des Fahrzeuges (1) zur Adaption der Kennlinie nach einem der Ansprüche 1 bis 6 eingerichtet.

8. Steuereinheit gemäß Anspruch 7, **dadurch gekennzeichnet, dass** der Ladezustandsregler (4) eingerichtet ist als Energieverbraucher einen Elektromotor (6) des Hybridantriebs aufzuschalten.

9. Fahrzeug (1) mit Hybridantrieb, einem Energiespeicher (5), einer Fahrgeschwindigkeitserfassungseinrichtung, eingerichtet zum Erfassen eines Fahrgeschwindigkeitsgrößenwerts des Fahrzeuges (1), Ladezustandserfassungsmitteln (4), eingerichtet zum Erfassen eines Istladezustandes des Energiespeichers (5) und einer Steuereinheit (2) gemäß einem der Ansprüche 7 bis 8.

10. Fahrzeug gemäß Anspruch 9, **dadurch gekennzeichnet, dass** der Energiespeicher (5) eine maximale Energiespeicherkapazität im Bereich einer maximalen Bremsenergie des Fahrzeuges (1) bei einer Fahrzeughöchstgeschwindigkeit aufweist.

11. Fahrzeug gemäß einem der Ansprüche 9 oder 10, **dadurch gekennzeichnet, dass** der Energiespeicher (5) als Mehrschicht-, bevorzugt als Doppelschichtkondensator ausgeführt ist.

## Claims

1. A method for controlling the charging state of an energy storage unit (5) for a vehicle (1) with a hybrid drive, comprising the following method steps:
1.1 detecting a driving speed quantity value of the vehicle (1) by means of a driving speed detection device and determination of a setpoint state of charge of the energy storage unit (5) depending on the driving speed quantity value by a control unit (2);
1.2 detecting an actual state of charge of the energy storage unit (5) by means of charging state detecting means; and
1.3 comparison of the actual state of charge with the setpoint state of charge by the control unit (2);
1.4 an energy consumer is activated by means of a charge-state controller (4) for at least partly discharging the energy storage unit (5) when the actual state of charge exceeds the setpoint state of charge;
1.5 for determining the setpoint state of charge of the energy storage unit (5), the setpoint state of charge is determined by a characteristic curve which tabulates the setpoint charge-state values depending on the driving speed quantity values or links the same via a function;
**characterized in that**
1.6 an adaptation of the characteristic curve is made by means of the control unit (2) when the vehicle (1) is braked, with a setpoint charge-state value of the characteristic curve which is associated with the driving speed quantity value that is current during the braking being added to a corrective value determined by the control unit (2), and the setpoint charge-state value which is increased or reduced by the addition with the corrective value is stored as the new setpoint charge-state value of the characteristic curve in the current driving speed quantity value.

2. A method according to claim 1, **characterized in that** an electric motor (6) of the hybrid drive is activated as the energy consumer.

3. A method according to claim 1, **characterized in that** the following method steps are performed for determining the corrective value:
3.1 determining a setpoint charge-state differential value from the setpoint state of charge in the current driving speed quantity value at the beginning of braking and an end setpoint charge-state value in an end driving speed quantity value at the end of the braking;
3.2 determining an actual charge-state differential value from the actual state of charge at the beginning of the braking and an end actual charge-state value of the energy storage unit (5) at the end of the braking;
3.3 comparison of the setpoint charge-state differential value with the actual charge-state differential value;
3.4 determining the corrective value for decreasing the characteristic curve for a subsequent braking under the same braking conditions in such a way that the new setpoint charge-state value is smaller than the old setpoint charge-state value when the actual charge-state differential value is larger than the setpoint charge-state differential value, or determining the corrective value for increasing the characteristic curve under the same braking conditions in such a way that the new setpoint charge-state value is larger than the old setpoint charge-state value when the actual charge-state differential value is smaller than the setpoint charge-state differential value.

4. A method according to claim 3, **characterized in that** in determining the corrective value for decreasing the characteristic curve, setpoint charge-state values of the characteristic curve which are associated with larger driving speed quantity values than the current driving speed quantity value are reduced to the new setpoint charge-state value when the setpoint charge-state values associated with the larger driving speed quantity values are larger than the new setpoint charge-state value, and in determining the corrective value for increasing the characteristic curve, setpoint charge-state values of the characteristic curve which are associated with lower driving speed quantity values than the current driving speed quantity value are increased to the new setpoint charge-state value when the setpoint charge-state values associated with the lower driving speed quantity values are lower than the new setpoint charge-state value.

5. A method according to one of the claims 3 or 4, **characterized in that** the absolute value of the corrective value is determined by multiplying a difference between the setpoint charge-state differential value and the actual charge-state differential value with a learning factor, with preferably the learning factor being chosen smaller than one.

6. A method according to claim 5, **characterized in that** the learning factor in determining the corrective value for decreasing the characteristic curve differs in respect of its amount from the learning factor in determining the corrective value for increasing the characteristic curve, with preferably the learning factor in decreasing the characteristic curve being larger than in increasing the characteristic curve.

7. A control unit (2) for controlling the charge state of an energy storage unit (5) for a vehicle (1) with hybrid drive, set up
7.1 for determining a setpoint state of charge of the energy storage unit (5) depending on driving speed quantity value of the vehicle (1) which can be detected by a driving speed detection device, and
7.2 for comparing an actual state of charge of the energy storage unit (5) that can be detected by charge-state detection means with the setpoint state of charge;
7.3 the control unit comprises a charge-state controller (4), with the charge-state controller (4) being set up for activating an energy consumer for discharging at least in part the energy storage unit when the actual state of the charge exceeds the setpoint state of charge;
7.4 the control unit comprises an information storage unit (3), with a characteristic curve being stored in the information storage unit (3) which tabulates setpoint charge-state values depending on the driving speed quantity values or links the same via a function;
7.5 the control unit (2) is set up for determining the setpoint state of charge of the energy storage unit (5) by determining the setpoint state of charge from the characteristic curve;
**characterized by** the following feature:
the control unit (2) is set up for adaptation of the characteristic curve according to one of the claims 1 to 6 during a braking of the vehicle (1).

8. A control unit according to claim 7, **characterized in that** the charge-state controller (4) is set up for activating an electric motor (6) of the hybrid drive as an energy consumer.

9. A vehicle (1) with a hybrid drive, an energy storage unit (5), a driving speed detection device which is set up for detecting a driving speed quantity value of the vehicle (1), charge-state detection means (4) which are set up for detecting an actual state of charge of the energy storage unit (5), and a control unit (2) according to one of the claims 7 to 8.

10. A vehicle according to claim 9, **characterized in that** the energy storage unit (5) has a maximum energy storage capacity in the range of a maximum braking energy of the vehicle (1) at top speed of the vehicle.

11. A vehicle according to one of the claims 9 or 10, **characterized in that** the energy storage unit (5) is arranged as a multilayer capacitor, preferably as a double-layer capacitor.

## Revendications

1. Procédé de régulation de l'état de charge d'un accumulateur d'énergie (5) pour un véhicule (1) à motorisation hybride, comprenant les étapes de :
1.1 acquisition d'une grandeur de vitesse de marche du véhicule (1) au moyen d'un dispositif d'acquisition de la vitesse de marche et détermination d'un état de charge nominal de l'accumulateur d'énergie (5) en fonction de la grandeur de vitesse de marche par une unité de commande (2) ;
1.2 acquisition d'un état de charge réel de l'accumulateur d'énergie (5) au moyen de moyens d'acquisition de l'état de charge ; et
1.3 comparaison de l'état de charge réel avec l'état de charge nominal par l'unité de commande (2) ;
1.4 activation au moyen d'un régulateur d'état de charge (4) d'un consommateur d'énergie pour décharger au moins partiellement l'accumulateur d'énergie (5) quand l'état de charge réel dépasse l'état de charge nominal ;
1.5 pour déterminer l'état de charge nominal de l'accumulateur d'énergie (5), l'état de charge nominal est déterminé par une courbe caractéristique et les valeurs d'état de charge de consigne sont déterminées sous forme de tableau ou associées par une fonction en fonction des grandeurs de vitesse de marche ;
**caractérisé en ce que**
1.6 l'unité de commande (2) réalise en cas de freinage du véhicule (1) une adaptation de la courbe caractéristique, une valeur d'état de charge nominal de la courbe caractéristique associée à l'état de charge correspondant à la grandeur de vitesse de marche au moment du freinage étant additionnée avec une valeur de correction déterminée par l'unité de commande (2) et l'état de charge nominal augmenté ou réduit par l'addition de la valeur de correction est enregistré comme nouvelle valeur de l'état état de charge nominal de la courbe caractéristique à la grandeur de vitesse de marche actuelle.

2. Procédé selon la revendication 1, **caractérisé en ce que** le consommateur d'énergie connecté est un moteur électrique (6) de la motorisation hybride.

3. Procédé selon la revendication 1, **caractérisé en** les étapes de procédé suivante sont exécutées pour déterminer la valeur de correction :
3.1 détermination d'une différence de valeur nominale d'état de charge issue de la valeur nominale d'état de charge à la grandeur de vitesse de marche actuelle au début du freinage et d'une valeur finale de l'état de charge nominal à une grandeur de vitesse de marche à la fin du freinage ;
3.2 détermination d'une différence de valeur réelle d'état de charge issue de la valeur réelle d'état de charge au début du freinage et d'une valeur finale de l'état de charge réel de l'accumulateur d'énergie (5) à la fin du freinage ;
3.3 comparaison de la différence de valeur nominale d'état de charge avec la différence de valeur réelle d'état de charge ;
3.4 détermination d'une valeur de correction lors d'une baisse de la courbe caractéristique pour un freinage suivant dans les mêmes conditions de freinage, de telle sorte que la nouvelle valeur nominale d'état de charge soit inférieure à l'ancienne valeur nominale d'état de charge quand différence de valeur réelle d'état de charge est plus grande que la différence de valeur nominale d'état de charge ; ou détermination de la valeur de correction lors d'une élévation de la courbe caractéristique pour un freinage suivant dans les mêmes conditions de freinage, de telle sorte que la nouvelle valeur nominale d'état de charge soit supérieure à l'ancienne valeur nominale d'état de charge si la différence de valeur réelle d'état de charge est inférieure à la différence de valeur nominale d'état de charge.

4. Procédé selon la revendication 3, **caractérisé en ce que** lorsque la valeur de correction est déterminée pour abaisser la courbe caractéristique, à une grandeur de vitesse de marche supérieure à la grandeur de vitesse de marche actuelle, les valeurs nominales d'état de charge correspondantes de la courbe caractéristique sont abaissées à la nouvelle valeur nominale d'état de charge si les valeurs nominales d'état de charge correspondant aux grandeurs de vitesse de marche plus élevées sont plus grandes que la nouvelle valeur nominale d'état de charge ; et si la valeur de correction est déterminée pour relever la courbe caractéristique, à une grandeur de vitesse de marche inférieure à la grandeur de vitesse de marche actuelle, les valeurs nominales d'état de charge de la courbe caractéristique sont augmentées aux nouvelles valeurs nominales d'état de charge si les valeurs nominales d'état de charge correspondant aux plus petites grandeurs de vitesse de marche sont inférieures à la nouvelle valeur nominale d'état de charge.

5. Procédé selon l'une des revendications 3 ou 4, **caractérisé en ce que** la valeur absolue de la valeur de correction est déterminée par multiplication d'une différence entre la différence de valeur nominale d'état de charge et la différence de valeur réelle d'état de charge avec un facteur d'apprentissage, lequel facteur d'apprentissage est choisi de préférence inférieur à un.

6. Procédé selon la revendication 5, **caractérisé en ce que** le facteur d'apprentissage lorsque la valeur de correction est déterminée pour abaisser la courbe caractéristique diffère quantitativement du facteur d'apprentissage lorsque la valeur de correction est déterminée pour relever la courbe caractéristique, le facteur d'apprentissage lors de l'abaissement de la courbe caractéristique étant de préférence plus grand que lors de l'élévation de la courbe caractéristique.

7. Unité de commande (2) pour réguler l'état de charge d'un accumulateur d'énergie (5) pour un véhicule (1) à motorisation hybride, équipée
7.1 pour déterminer un état de charge nominal de l'accumulateur d'énergie (5) en fonction d'une grandeur de vitesse de marche du véhicule (1) pouvant être acquise par un dispositif d'acquisition de la vitesse de marche ; et
7.2 pour comparer un état de charge réel de l'accumulateur d'énergie (5) pouvant être acquis par des moyens d'acquisition de l'état de charge avec l'état de charge nominal ;
7.3 l'unité de commande présente un régulateur d'état de charge (4), lequel régulateur d'état de charge (4) est équipé pour activer un consommateur d'énergie afin de décharger au moins partiellement l'accumulateur d'énergie si l'état de charge réel dépasse l'état de charge nominal ;
7.4 l'unité de commande comprend une mémoire d'informations (3), laquelle mémoire d'informations (3) contient une courbe caractéristique qui associe des valeurs nominales d'état de charge en fonction de grandeurs de vitesse de marche sous forme de tableau ou à l'aide d'une fonction ;
7.5 l'unité de commande (2) est équipée pour déterminer l'état de charge nominal de l'accumulateur d'énergie (5) en déterminant les états de charge nominaux de la courbe caractéristique ;
**caractérisée en ce que** l'unité de commande (2) est équipée pour réaliser, en cas de freinage du véhicule (1), l'adaptation de la courbe caractéristique selon l'une des revendications 1 à 6.

8. Unité de commande selon la revendication 7, **caractérisée en ce que** le régulateur d'état de charge (4) est utilisé pour activer en tant que consommateur d'énergie un moteur électrique (6) de la motorisation hybride.

9. Véhicule (1) avec une motorisation hybride, un accumulateur d'énergie (5), une dispositif d'acquisition de la vitesse de marche équipé pour acquérir une grandeur de vitesse de marche du véhicule (1), des moyens d'acquisition de l'état de charge (4) équipés pour acquérir un état de charge réel de l'accumulateur d'énergie (5) et une unité de commande (2) selon l'une des revendications 7 à 8.

10. Véhicule selon la revendication 9, **caractérisé en ce que** l'accumulateur d'énergie (5) présente une capacité maximale d'accumulation d'énergie au voisinage d'une énergie de freinage maximale du véhicule (1) à une vitesse maximale du véhicule.

11. Véhicule selon l'une des revendications 9 ou 10, **caractérisé en ce que** l'accumulateur d'énergie (5) est construit comme un condensateur multicouche, de préférence à deux couches.
